# EUROPEAN PATENT SPECIFICATION

(11) **EP 3 824 602 B1**
(45) Date of publication and mention of the grant of the patent: **18.05.2022**
(21) Application number: 19746397.9
(22) Date of filing: 17.07.2019
(51) Int. Cl.: H04L 12/721, H04L 12/715

(54) **MULTI-CLOUD CONNECTIVITY USING SRV6 AND BGP**
MULTI-CLOUD-KONNEKTIVITÄT MIT SRV6 UND BGP
CONNECTIVITÉ MULTI-NUAGES UTILISANT SRV6 ET BGP

(30) Priority: 17.07.2018 US 201816037765
(43) Date of publication of application: 26.05.2021
(73) Proprietor: Cisco Technology, Inc., San Jose, California 95134-1706 (US)
(72) Inventor: TOLLET, Jerome, 75004 Paris (FR); FIOCCO, Alain, 92100 Boulogne-Billancourt (FR); SURCOUF, Andre Jean-Marie, 95320 St. Leu La Foret (FR); GARVIA, Pablo Camarillo, 28007 Madrid (ES); FILSFILS, Clarence, 1150 Brussels (BE)
(74) Representative: Noble, Nicholas
(86) International application number: PCT/US2019/042131
(87) International publication number: WO 2020/018623

(56) References cited:
- EP-A1- 2 933 958
- US-A1- 2012 224 506

## Description

This application claims the benefit of, and priority to, U.S. Non-Provisional Patent Application No. 16/037,765, filed on July 17, 2018, entitled "MULTI-CLOUD CONNECTIVITY USING SRV6 AND BGP".

### TECHNICAL FIELD

The present technology pertains to cloud computing, and more specifically to multi-cloud connectivity.

### BACKGROUND

The ubiquity of Internet-enabled devices has created an enormous demand for Internet services and content. We have become a connected society where users are increasingly reliant on network services and content. This Internet-connected revolution has created significant challenges for service and content providers who often struggle to service a high volume of user requests without falling short of user performance expectations. For example, cloud providers typically need large and complex datacenters to keep up with network and content demands from users. These datacenters are generally equipped with server farms configured to host specific services, and include numerous switches and routers configured to route traffic in and out of the datacenters. In many instances, a specific datacenter is expected to handle millions of traffic flows and service requests.

Private networks hosted by private entities, such as enterprises, similarly have increasing demands for computing resources and performance. To satisfy such increasing demands, private networks often purchase compute resources and services from public cloud providers. For example, private entities can create a virtual private cloud on a public cloud provider and connect the virtual private cloud to their private network in order to grow their available compute resources and capabilities. Such virtual private clouds can be created on specific provider clouds or cloud regions. Private entities can select where to establish a virtual private cloud based on proximity, cost, performance, services, etc. Unfortunately, while the number of cloud providers and regions available to private entities continues to grow, the lack of uniformity in the toolsets, architectures, and application programming interfaces (APIs) implemented by different cloud providers and regions has created significant challenges for entities wanting to deploy virtual private clouds on different cloud providers or regions. Often, entities are unable to connect to different cloud providers or regions, or maintain interconnectivity between various cloud providers or regions. In many cases, establishing connectivity between clouds or regions can be extremely difficult, requiring time-consuming configuration efforts and requiring specific network devices or dedicated infrastructure.

US2012/224506 is directed to distributing traffic engineering (TE) link information across network routing protocol domain boundaries using a routing protocol. In one example, a network device logically located within a first routing protocol domain includes a routing protocol module executing on a control unit to execute an exterior gateway routing protocol. The routing protocol module of the network device receives an exterior gateway routing protocol advertisement from a router logically located within a second routing protocol domain and decodes traffic engineering information for a traffic engineering link from the exterior gateway routing protocol advertisement. A path computation module of the network device computes a traffic engineered path by selecting the traffic engineering link for inclusion in the traffic engineered path based on the traffic engineering information.

In EP2933958 a controller device in a computer network domain learns border gateway protocol (BGP) egress peering segments from one or more border routers of the domain, and determines a selected flow to segment route via a particular egress peering segment, the selected flow from a given routing device within the domain to a given destination of a remote domain. As such, the controller device may then instruct the given routing device to segment route the selected flow via the particular egress peering segment.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates a diagram of an example cloud data center architecture 100 which can be implemented by one or more clouds in a multi-cloud environment;
FIG. 2 illustrates a diagram of an example multi-cloud environment with an SRv6 overlay;
FIG. 3A illustrates an example IPv6 and SRv6 packet;
FIG. 3B illustrates a schematic diagram of an example destination field in an IPv6 and SRv6 header;
FIG. 4 illustrates an example flow of SRv6 traffic based on corresponding IPv6 and SRv6 headers;
FIG. 5A illustrates a diagram of example components and interactions for creating virtual private clouds (VPCs) in a multi-cloud environment with an SRv6 overlay, such as the multi-cloud environment shown in FIG. 2;
FIGs. 5B through 5E illustrate example scenarios for creating and interconnecting VPCs in a multi-cloud environment with an SRv6 overlay, such as the multi-cloud environment shown in FIG. 2;
FIG. 6 illustrates an example service chaining traffic flow where packets are steered over an SRv6 overlay through nodes on VPCs in a multi-cloud environment with an SRv6 overlay, such as the multi-cloud environment shown in FIG. 2;
FIG. 7 illustrates a method for establishing multi-cloud connectivity via SRv6 and BGP;
FIG. 8 illustrates an example network device in accordance with various embodiments; and
FIG. 9 illustrates an example computing device in accordance with various embodiments.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the scope of the disclosure.

### OVERVIEW

This invention is defined by the appended claims, Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed herein are systems, methods, and computer-readable media for establishing and managing connectivity between clouds using SRv6. The method involves adding a new virtual private cloud (VPC) to a multi-cloud environment including a private network and one or more virtual VPCs connected to the private network via a segment routing (SR) domain (e.g., an SRv6 overlay) and respective virtual routers on the one or more VPCs and the private network. The method includes deploying, on the new VPC, a new virtual router configured to route incoming and outgoing traffic for the new VPC and, after deploying the new virtual router on the new VPC, registering the virtual router at a border gateway protocol (BGP) controller associated with the private network. The method can involve establishing a connection between the BGP controller and the new virtual router and receiving, at the BGP controller and from the new virtual router, topology information associated with the new VPC.

The method involves identifying routes in the multi-cloud environment based on one or more paths computed based on the topology information. The one or more paths can be respective paths between the private network, the one or more VPCs, and the new VPC. In some cases, the one or more paths can be best paths computed by a path computation engine based on the topology information. Once the routes are identified, the BGP controller is configured to send to the new virtual router routing information for communicating across the multi-cloud environment. The routing information can include the routes, segment routing identifiers and segment routing policies associated with the multi-cloud environment. The method includes, based on the routing information, providing interconnectivity between the private network, the one or more VPCs, and the new VPC via the segment routing domain, the respective virtual routers, and the new virtual router. For example, the respective virtual routers and the new virtual router can use the routes, segment routing identifiers, and segment routing policies to route traffic across the multi-cloud environment. The respective virtual routers and the new virtual router can be SRv6-capable nodes which can use the segment routing identifiers to steer traffic to destinations on the segment routing domain.

### DESCRIPTION OF EXAMPLE EMBODIMENTS

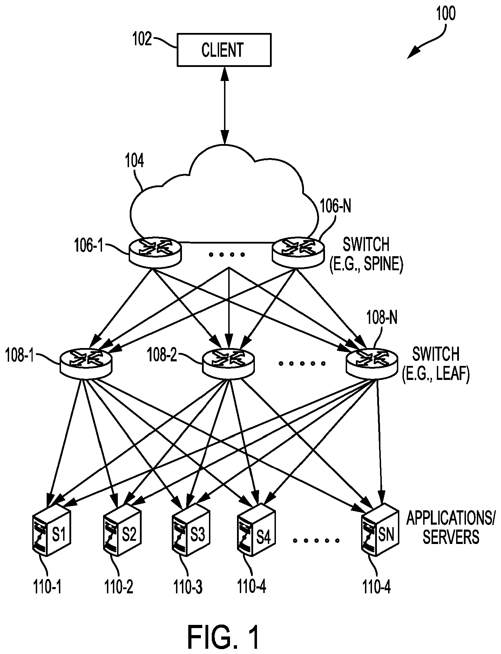

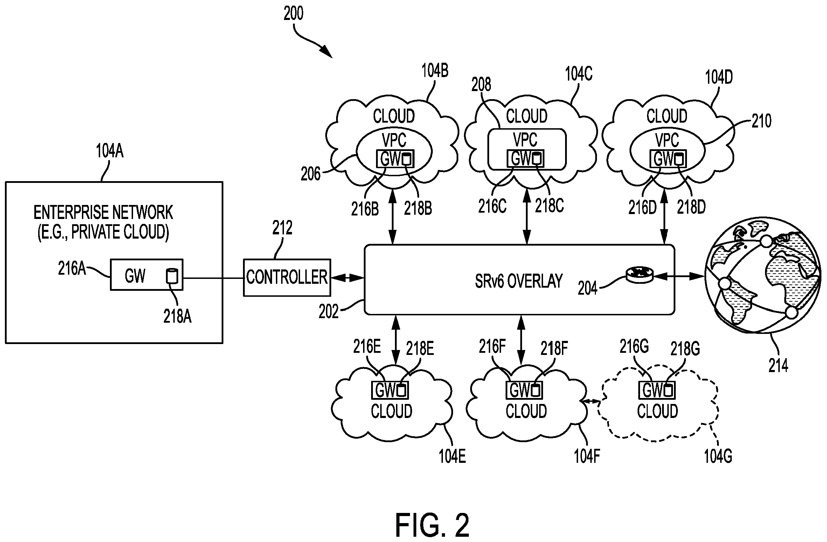

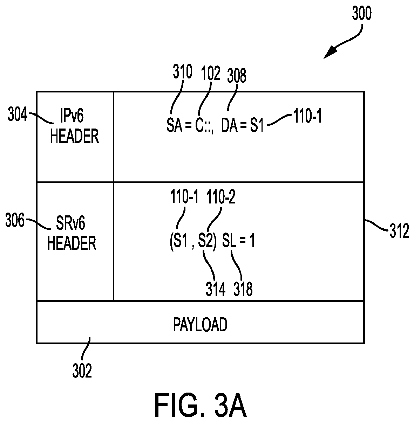

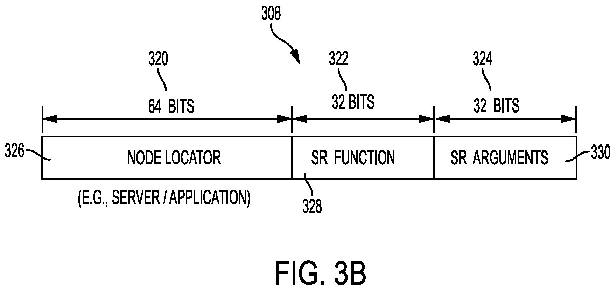

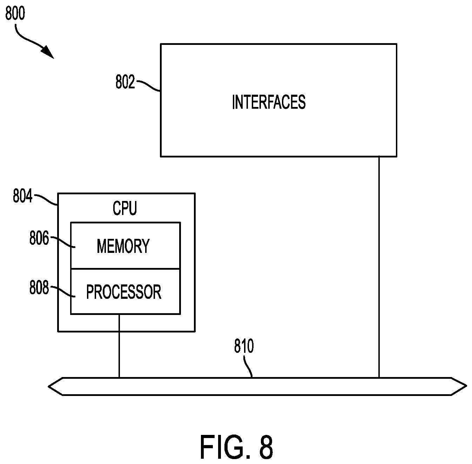

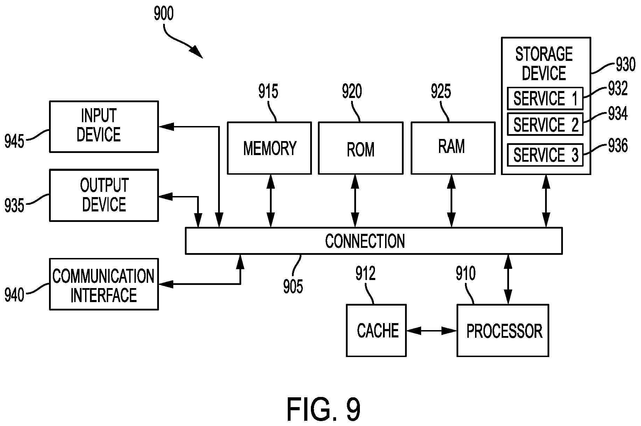

The disclosed technology provides efficient and user-friendly strategies for establishing and managing connectivity between clouds. The present technology involves system, methods, and computer-readable media for multi-cloud connectivity using segment routing (SR) over IPv6 ("SRv6" hereinafter) and border gateway protocol (BGP). The present technology will be described in the following disclosure as follows. The discussion begins with an overview of SRv6 and IPv6. A description of an example cloud data center architecture and an example multi-cloud environment with an SRv6 overlay, as illustrated in FIGs. 1 and 2, and multi-cloud connectivity strategies and examples using SRv6 and BGP, as illustrated in FIGs. 3-7, will then follow. The discussion concludes with a description of an example network device, as illustrated in FIG. 8, and an example computing device, as illustrated in FIG. 9, including example hardware components suitable for hosting software applications and performing computing operations. The disclosure now turns to an overview discussion of IPv6 and SRv6.

The approaches herein can utilize segment routing (SR) to steer connection or communication requests towards servers or nodes on different clouds or cloud regions. IPv6 and SR, which are further described below, can be used to steer requests efficiently while limiting state information. The request will be routed to the nodes identified in the SR packet based on the IPv6 and SRv6 headers. The IPv6 header can include a Source Address (SA) and a Destination Address (DA), such as a destination server or node. An SR Header can include a list of SR nodes (e.g., S1, S2, S3, etc.) and a Segment Left (SL) counter which identifies the number of remaining destination servers or nodes.

### IPv6 Environment

In an IPv6 environment, such as an IPv6-centric data center, servers can be reached via an IPv6 physical prefix. The servers can run application services in isolated environments, such as virtual machines (VMs) or software containers, which can be assigned an IPv6 virtual address (VIP). In some cases, a virtual switch (e.g., Open vSwitch, vector packet processing, etc.) can be deployed on a server to route packets between physical and virtual interfaces on the server. This allows the network (e.g., data center) to be fully Layer-3 routed, without having to deploy Layer-2 tunnels such as VLANs or VXLANs.

Routing the VIPs corresponding to the different applications running in the data center can be achieved in several manners. In some examples, the virtual switches can run Interior Gateway Protocol (IGP) to propagate direct routes to the VIPs. Other examples may use a mobility protocol, such as Identifier-Locator Addressing for IPv6, wherein edge routers perform the translation between physical and virtual addresses. Moreover, network devices can use Border Gateway Protocol (BGP) to exchange routing information. As will be further explained below, the approaches herein implement segment routing to establish and manage connectivity between clouds.

### Segment Routing (SR)

SR is a source-routing paradigm, initially designed for traffic engineering, which allows for a packet to follow a predefined path, defined by a list of segments, inside an SR domain. The approaches herein leverage an SRv6 architecture and IPv6 connectivity to efficiently create and manage multi-cloud connectivity.

SRv6 and IPv6 can be leveraged together by implementing an IPv6 and SRv6 header in an IPv6 packet. For example, in some cases, an IPv6 extension header can be implemented to identify a list of segments for SR and a counter Segments Left, indicating the number of remaining segments to be processed until the final destination of the packet is reached. In an SRv6 packet, the IPv6 destination address can be overwritten with the address of the next segment. This way, the packet can go through SR-capable routers until reaching the next intended SR hop. Upon receipt of an SRv6 packet, an SR-capable router will set the destination address to the address of the next segment, and decrease the Segments Left counter. When the packet reaches the last SR hop, the final destination of the packet is copied to the IPv6 destination address field. Depending on the value of a flag in the header, the SRv6 header can be stripped by the last SR hop so that the destination receives a vanilla IPv6 packet.

FIG. 1 illustrates a diagram of an example cloud data center architecture 100 which can be implemented by one or more clouds in a multi-cloud environment. The cloud data center architecture 100 can include a cloud 104, which can be a private cloud, a public cloud, a hybrid cloud, a virtual private cloud (VPC), a cloud region, etc. The cloud 104 can host one or more data centers and/or networks. For example, the cloud 104 can include a single data center or a plurality of data centers. The cloud 104 can be physically located in one geographic location or distributed throughout multiple geographic locations. Moreover, the cloud 104 can include forwarder-side and server-side architectures or components.

The cloud 104 switches 106-1 through 106-N (collectively "106" hereinafter) and 108-1 through 108-N (collectively "108" hereinafter) configured to route traffic in the cloud data center architecture 100. The switches 106, 108 can include any network device with layer 2 (L2) and/or layer 3 (L3) capabilities. In this example, the switches 106 represent spine switches and the switches 108 represent leaf switches.

The client 102 can connect to the cloud 104 and access application servers 110-1 through 110-N (collectively "110" hereinafter) via the switches 106, 108. The client 102 can be a network, such as a cloud network or data center (e.g., a private cloud, a public cloud, a hybrid cloud, a cloud region or segment, a virtual private cloud, etc.), or any computing device, such as a laptop, a desktop, a tablet computer, a mobile phone, a server, a smart device (e.g., smart television, smart watch, etc.), an internet of things (IoT) device, etc.

The switches 106 can serve as edge devices in the cloud 104, and route traffic to and from the cloud 104. The switches 106 can thus serve as the egress and ingress point for the cloud 104. The switches 106 can also route traffic to the switches 108 in the cloud 104, which can route traffic to other nodes (e.g., appliances, firewalls, load balancers, etc.) and application servers 110 in the cloud 104.

The application servers 110 can represent physical machines and/or resources hosting applications, isolated environments, or services in the cloud 104. For example, the application servers 110 can be physical servers running various applications in the cloud 104. The application servers 110 can run some or all of their applications in isolated environments, such as VMs or software containers. In some cases, an application can by hosted by, and/or run on, multiple application servers 110 in the cloud 104. For example, multiple application servers 110 can run instances of an application (e.g., virtual instances, replicas, parallel instances, mirror instances, etc.).

The application servers 110 can include a physical network interface (e.g., NIC) to communicate with other devices or services (e.g., devices or services in the cloud data center architecture 100). The physical network interface can be assigned a physical prefix or network address for such communications. The application servers 110 can also include one or more virtual interfaces (e.g., vNICs) which can provide virtualized or abstract representations of network interfaces and connections. Virtual interfaces can provide added flexibility and network capabilities, as well as various other benefits or services, such as aggregation of links or data, isolation of data or networks, decoupling of application and system traffic, expansion of network interfaces, network redundancy, dedicated links, and so forth. Virtual interfaces can be assigned virtual addresses (e.g., VIPs) in the cloud 104. The virtual addresses can identify the virtual interfaces as well as any applications or isolated environments associated with the virtual addresses on the application servers 110.

For example, an application can be assigned a virtual address in the cloud 104, which can be used to identify the application in the cloud 104 and route traffic to and from the application. The virtual address can be used to steer traffic to and from a virtual instance of the application running on one or more of the application servers 110. In some cases, the virtual address can be mapped to the same application on multiple application servers 110, and can be used to communicate with an instance of the application on any of the multiple application servers 110.

In some cases, the application servers 110 can include a virtual switch, such as OVS or VPP, which can route traffic to and from the application servers 110. For example, a virtual switch can route traffic between physical and virtual network interfaces on an application server, between applications and/or isolated environments on the application server, and between the application server and devices or applications outside of the application server. To illustrate, an application server can run multiple workloads (e.g., applications in different VMs or containers) assigned to different virtual interfaces and virtual addresses. A virtual switch on the application server can route traffic to and from the different workloads by translating the virtual addresses of the workloads and communicating with the virtual interfaces as well as other network interfaces such as the physical network interface(s) on the application server.

FIG. 2 illustrates a diagram of an example multi-cloud environment 200 with an SRv6 overlay 202. The multi-cloud environment 200 includes clouds 104A-G interconnected through an SRv6 overlay 202 which routes traffic between the clouds 104A-G using SRv6. In this example, cloud 104A represents a private cloud or site, and clouds 104B-G represent public clouds. Moreover, the clouds 104B, 104C, 104D include virtual private clouds (VPCs) 206, 208, 210 configured for cloud 104A and hosted by the clouds 104B, 104C, 104D. Clouds 104E-G, as illustrated in this example, do not include VPCs associated with cloud 104A. However, as described below, the approaches herein can allow VPCs to be created for cloud 104A on any of the clouds 104E-G.

A controller 212 can interact with gateways 216A-G on clouds 104A-G to collect topology information, perform path computation, propagate routes across the clouds 104A-G and/or VPCs 206-210, propagate segment routing identifiers (SIDs) and policies across the clouds 104A-G and/or VPCs 206-210, perform traffic engineering, etc. The controller 212 can be, for example, a BGP controller with a path computation engine. The controller 212 can reside on cloud 104A or any other network or cloud. The gateways 216A-G can be, for example, virtual gateways available at the clouds 104A-G. In some cases, the virtual gateways can include a vector packet processing engine (VPP).

The controller 212 can collect topology information from the clouds 104A-G and/or VPCs 206-210 and propagate forwarding rules and SR IDs (e.g., SIDs) and policies using one or more protocols such as OSPF (Open Shortest Path First), IS-IS (Intermediate System to Intermediate System), BGP Link-State (BGP-LS), BGP Traffic Engineering (BGP-TE), etc. For example, the controller 212 can collect topology information for the clouds 104A-G and/or VPCs 206-210 from gateways 216A-G using BGP-LS protocol. The controller 212 can also include a path computation engine (PCE) for computing the best paths between the gateways 216A-G. The controller 212 can use the collected topology and/or cloud information to perform the path computation. The controller 212 can then use BGP-TE to populate reachability information, such as forwarding rules and SR IDs and policies, on the gateways 216A-G.

The gateways 216A-G can include a control plane that interfaces with BGP-LS and BGP-TE to receive the forwarding rules and SR IDs policies from the controller 212. The gateways 216A-G can also include a data plane that processes IPv4 and/or IPv6 packets and is able to encapsulate/decapsulate IPv4 or IPv6 packets into SRv6 packets. Moreover, the gateways 216A-G can include BGP agents 218A-G, such as GoBGP agents, to interact with the controller 212 or any BGP peers. In some cases, the gateways 216A-G can also include an active measurement system based on IP SLA (Internet Protocol Service Level Agreement) to collect network performance information and monitor quality-of-service (QoS) between the gateways 216A-G.

The controller 212 can communicate with the clouds 104A-G via IPv4 or IPv6. The SRv6 overlay 202 can include SRv6-capable nodes that can route traffic over the SRv6 overlay 202 using SRv6, as further explained below.

FIG. 3A illustrates an example SRv6 packet 300 for traffic routed via the SRv6 overlay 202. The SRv6 packet 300 includes a payload 302, an IPv6 header 304, and an SR header 306. The SR header 306 can include a segments field 312 containing a list of segments 314 or SR list. The list of segments 314 can include a set of destination nodes for the SRv6 packet 300. For example, the list of segments 314 can include application server 110-1 (S1) and application server 110-2 (S2) from the cloud 104 shown in FIG. 1. The destination nodes in the list of segments 314 can reside on one cloud (e.g., 104) or multiple clouds (e.g., 104A-G). The list of segments 314 can also include a respective function for each segment, as further described below with reference to FIG. 3B.

The list of segments 314 in the SR header 306 can be used by nodes in the SRv6 overlay 202 to steer the packet 300 to the destination nodes (e.g., application servers 110-1 and 110-2) in the list of segments 314. The list of segments 314 identifies each segment (e.g., SRv6-capable node) along a path for the packet. Each SRv6-capable node can maintain a list of SRv6 segments instantiated at the node. The SRv6-capable node can use its list of SRv6 segments to route the packet to the next segment in the list of segments 314.

The segments field 312 can also include a counter 318, known as the Segments Left, which identifies the active segment. The value of the counter 318 is decreased by 1 each time it is received by an SRv6-capable node as the packet travels through the IPv6 network.

The IPv6 header 304 can include a source address field 310 and a destination address field 308. The source address field 310 can identify the source of the packet 300, such as client 102. The source address field 310 can include a network address of the original source of the packet 300, a return destination for the packet 300, and/or a current source or sender of the packet 300. The source field 310 can also include commands or functions to be implemented by the node identified in the source field 310, as will be further described below.

The destination address field 308 can identify the next segment or node from the list of segments 314. In this example, the destination address field 308 identifies server 110-1 (S1) which is the first destination node in the list of segments 314 for the packet 300. The destination address field 308 can be used to steer the packet 300 to the next destination. The destination field 308 in the IPv6 header 304 can allow the packet 300 to be routed even if the packet 300 traverses SR-unaware nodes.

The destination address field 308 can include a network prefix of the identified node or segment. For example, the destination address field 308 can include the physical prefix of server 110-1 (SI). This can ensure that the packet 300 is transmitted to that node or segment (e.g., server 110-1 (S1)), as the first destination for the packet 300. After the server 110-1 (S1) processes the packet 300, the server 110-1 (S1) can forward the packet 300 to the next segment in the list of segments 314, which in this example is server 110-2 (S2). When forwarding the packet, the server 110-1 (S1) can overwrite the destination address field 308 on the IPv6 header 304 to identify the server 110-2 (S2) as the destination, which ensures that the packet 300 is routed to server 110-2 (S2). Server 110-2 (S2) can then receive the packet 300 based on the destination address field 308. This way, the list of segments 314 in the SR header 306 as well as the destination address field 308 in the IPv6 header 304 can be used to push the packet 300 to the destination nodes in the list of segments 314.

As will be further explained, the list of segments 314 and/or destination address field 308 can include functions or commands (hereinafter "SR functions") to be implemented by associated nodes or segments. For example, the destination address field 308 can identify application server 110-1 (S1) and include a function to be applied by application server 110-1 (S1), such as a connect function which application server 110-1 (S1) can interpret as a request to connect with an application or node associated with the function. The destination address field 308 can contain the state of the packet 300, including the next destination of the packet, the source or return node, and any commands or functions for such nodes or segments.

Similarly, the list of segments 314 can include commands or functions for the segments in the list of segments 314. For example, the list of segments 314 can include a connect function for each of the destination node or segment, a force connect function for the last segment in the list of segments 314, one or more parameters for one or more segments (e.g., resource identifier, flow identifier, etc.), state information, and so forth.

SR functions can encode actions to be taken by a node directly in the SR header 306 and/or the IPv6 header 304. SR functions are executed locally by the SRv6-capable nodes. Example SR functions include, without limitation, End (i.e., endpoint function), End.X (i.e., endpoint function with Layer-3 cross-connect), End.T (i.e., endpoint function with specific IPv6 table lookup), End.S (i.e., endpoint in search of a target in table T), End.B6 (i.e., endpoint bound to an SRv6 policy), etc. For example, in an SR header (306) containing s::cj, *s::cj* denotes the shortest-path to the node s and an x-connect function (function c) to the neighbor j.

In some examples, each node can be assigned an entire IPv6 prefix. Accordingly, the lower-order bytes in the prefix can be used to designate different SR functions. In some cases, the SR functions may depend on the address of the first segment in the list of segments 314 (e.g., the "sender" of the function). To illustrate, when a node whose physical prefix is s receives a packet with the SR header 306 containing (*x*,..., *s*::*f*,...), the SR header 306 will trigger node s to perform a function *f* with argument x, denoted by s.f(x).

FIG. 3B illustrates a schematic diagram of an example destination address field 308 in an IPv6 header 304. The destination address field 308 can include 128 bits, which can be segmented to include a first segment 320 from the first 64 bits for the node prefix 326, a second segment 322 from the next 32 bits for an SR function 328, and a third segment 324 from the next 32 bits to include any arguments 330 for the SR function 328. While this example illustrates the destination address field 308 segmented into a segment of 64 bits, a segment of 32 bits, and a segment of 32 bits, it should be noted that the destination address field 308 allows for flexible bit selection and thus can be segmented in other ways. The example in FIG. 3B is provided for illustration and explanation purposes.

The node prefix 326 can include the physical prefix of the next segment or node. The SR function 328 can include a command or function associated with the node prefix 326. In some cases, the third segment 324 can be further segmented into sub-segments which can include arguments for the SR function 328. The arguments can be used to pass specific parameters for the SR function 328.

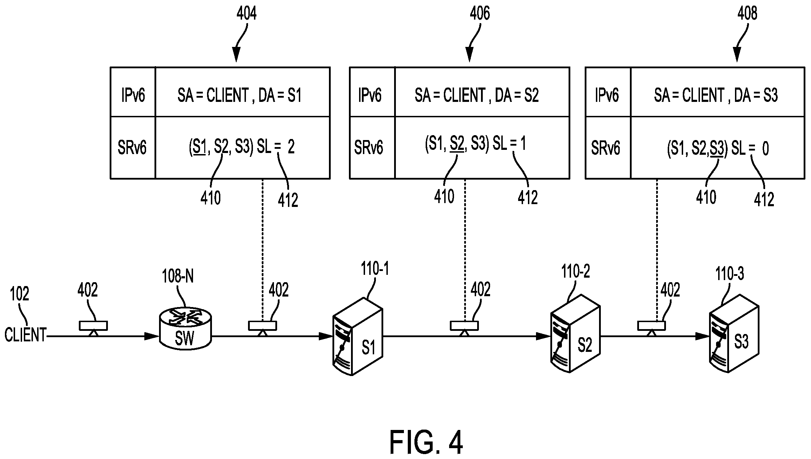

FIG. 4 illustrates an example flow of SRv6 traffic (e.g., SRv6 packet 300) based on corresponding IPv6 and SRv6 headers 404, 406, 408. In this example, a client 102 sends a packet 402 to switch 108-N. The packet 402 can identify the client device 102 as the source and a destination address for the traffic.

The switch 108-N can receive the packet 402 and forward the packet to application server 110-1 (S1) based on the IPv6 and SRv6 headers 404. The SRv6 header in the headers 404 can include a list of segments 410 identifying application servers 110-1, 110-2, 110-3 as the destination segments. The SRv6 header can in the headers 404 can also include a segments left (SL) counter 412 identifying the number of remaining segments or hops in the list of segments 410.

The application server 110-1 (S1) can receive the packet 402 from the switch 108-N and process it. The application server 110-1 (S1) can then forward the packet 402 to application server 110-2 (S2), which is the next segment in the list of segments 410, based on the list of segments 410 in the headers 406. The application server 110-1 (S1) can also decrease the SL counter 412 identifying the number of remaining segments or hops in the list of segments 410.

The application server 110-2 (S2) can receive the packet 402 from the application server 110-1 (S1) and process it. The application server 110-2 (S2) can then forward the packet 402 to application server 110-3 (S3), which is the next segment in the list of segments 410, based on the list of segments 410 in the headers 408. The application server 110-2 (S2) can also decrease the SL counter 412 identifying the number of remaining segments or hops in the list of segments 410.

The application server 110-3 (S3) can receive the packet 402 from the application server 110-2 (S2) and process it. The application server 110-3 (S3) is the last segment in the list of segments 410. Accordingly, the application server 110-3 (S3) can decrease the SL counter 412 identifying the number of remaining segments or hops in the list of segments 410, without forwarding the packet to another destination segment.

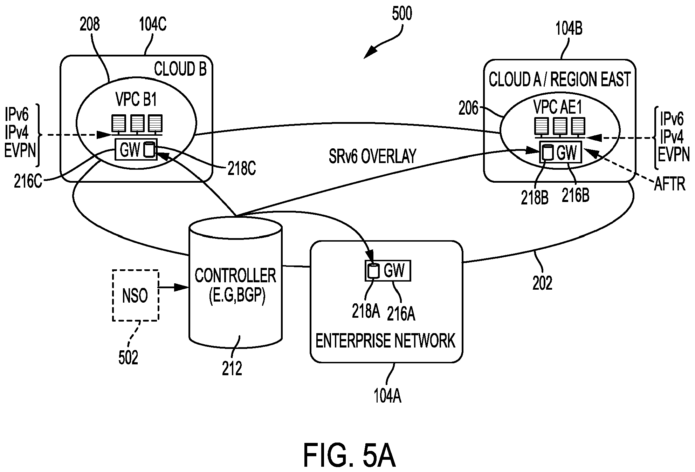

FIG. 5A illustrates a diagram 500 of example components and interactions for creating VPCs in clouds 104B and 104C on a multi-cloud environment with an SRv6 overlay 202, such as multi-cloud environment 200 shown in FIG. 2. In this example, cloud 104B represents an East Region cloud of Cloud Provider A, and cloud 104C represents a cloud associated with Cloud Provider B. VPCs 206 and 208 are created for a client associated with cloud 104A (e.g., enterprise network or private cloud) on clouds 104B and 104C. The VPCs 206 and 208 can be interconnected with cloud 104A and each other. Moreover, the VPCs 206 and 208 can serve as a virtual extension of cloud 104A hosted in clouds 104B and 104C.

When the client associated with cloud 104A creates the new VPCs (e.g., VPCs 206 and 208) on clouds 104B and 104C, a script or program can be triggered/called to deploy gateways 216B and 216C and agents 218B and 218C on clouds 104B and 104C. Each cloud provider (e.g., clouds 104B and 104C) can have specific application programming interfaces (APIs) to make such deployment possible. The gateways 216B and 216C and agents 218B and 218C can be deployed on VMs or nodes (e.g., servers, software containers, etc.) on clouds 104B and 104C. In some cases, the gateways 216B and 216C and agents 218B and 218C can be deployed in VMs from a cloud market place(s) associated with clouds 104B and 104C.

The gateways 216B and 216C can operate as a layer 3 (L3) router for traffic communicated to and from the VPCs (e.g., 206 and 208). Once deployed, the gateways 216B and 216C and agents 218B and 218C can announce and register themselves with the controller 212. The address of the controller 212 can be preconfigured in the case of a SaaS (software as a service) model or can be manually defined by the client if the client wants to operate its own controller.

The controller 212 can check if the newly created gateways (216B-C) are allowed to connect to the controller 212. Various policies can be considered, which may depend on different pricing models (e.g., limitations on the number of simultaneous number of virtual gateways per BGP controller, etc.). Once the connection with the controller 212 is established, the gateways 216B and 216C can start announcing private networks in the VPCs 206, 208 to the controller 212. This communication can be achieved through BGP-LS, for example.

The controller 212 can then send routes, SR IDs (SIDs) and SR policies to the gateways 216B and 216C. If required, the BGP agents 218B and 218C can also configure security protections, such as BGPSec protocol. In some cases, a network services orchestrator (NSO) 502 can be deployed in communication with the controller 212 to facilitate orchestration of resources on the various clouds (e.g., clouds 104A-C).

The gateways 216B and 216C can use the routes, SIDs, and SR policies to route traffic to segments in the SRv6 overlay 202. As the gateways 216B and 216C receive packets with SRv6 headers, the gateways 216B and 216C can route the packets to destination nodes and execute SR functions based on the SRv6 headers. In some cases, the approaches herein can implement a new SRv6 function flavor applicable to the End, End.X, End.T and SR proxy functions, that upon egressing a cloud (e.g., 104A, 104B, 104C), modifies the IPv6 source address (SA) in order to avoid RPF (Reverse Path Forwarding) check failures.

As illustrated above, the approaches herein provide techniques for easily and efficiently adding new regions or VPCs for a client (e.g., cloud 104A). The process can involve creating a new VPC in a particular cloud or cloud region, loading a virtual gateway on the cloud or cloud region for the new VPC which is pre-staged to register with a controller (e.g., controller 212), and sending routes, SIDs, and SR policies to the virtual gateway via the controller. Moreover, adding a new region or VPC does not affect other existing regions (i.e., no changes to others sites). As the newly created virtual gateway receives its configuration from the controller (212), any-to-any region or VPC routing is enabled without existing regions to intervene in the process.

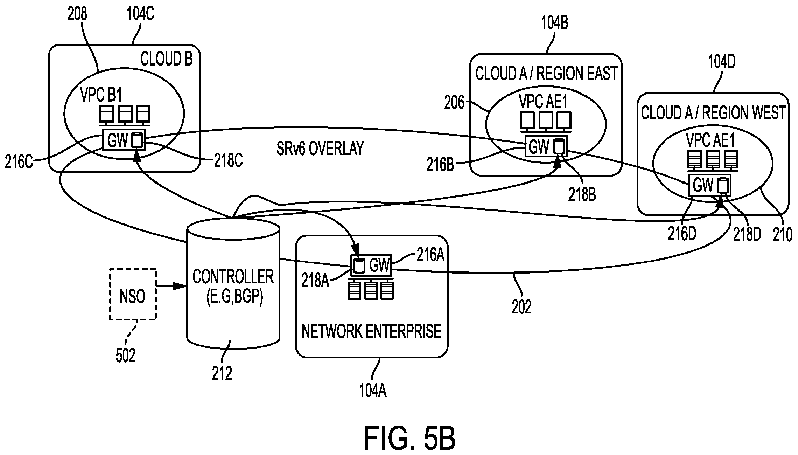

For example, FIG. 5B illustrates a new VPC 210 created on a different cloud (104D) and interconnected with cloud 104A and VPCs 206 and 208 on clouds 104B and 104C in the multi-cloud environment. In this example, the new VPC 210 is created in Region West of cloud A (e.g., 104D). The client (e.g., cloud 104A) first creates the new VPC 210 on the cloud 104D. The client then loads virtual gateway 216D and BGP agent 218D on the cloud 104D. The virtual gateway 216D and BGP agent 218D can be loaded in one or more VMs, servers, software containers, nodes, etc., on the cloud 104D. For example, the virtual gateway 216D can be deployed via a VM available on a cloud market place associated with cloud 104D.

The client can pre-stage the virtual gateway 216D (including the BGP agent 218D) to register with the controller 212. Once the virtual gateway 216D has connected and registered with the controller 212, the controller 212 can collect topology information from the virtual gateway 216D. The controller 212 can collect the topology information using BGP-LS, for example. The controller 212 can compute best paths between the new VPC 210 and the cloud 104A and VPCs 206 and 208. More specifically, the controller 212 can compute paths between the virtual gateways 216A-D at the various locations (e.g., 104A, 206, 208). The controller 212 can use a path computation engine to compute the paths.

The controller 212 then sends routes, SIDs and SR policies to the virtual gateway 216D. The SIDs can correspond to SR-aware nodes in the SRv6 overlay 202. The routes, SIDs and SR policies can be used to route traffic between the virtual gateways 216A-D over the SRv6 overlay 202. This provides interconnectivity between the virtual gateways 216A-D and, therefore, between the cloud 104A and the VPCs 206, 208, and 210. Such interconnectivity includes any-to-any connectivity between the cloud 104A and the VPCs 206, 208, 210. In some examples, the controller 212 can populate the virtual gateway 216D with specific forwarding rules via BGP SR-TE. The virtual gateway 216D can add the forwarding rules to its forwarding table, which the virtual gateway 216D can use to determine where or how to route traffic between the new VPC 210 and the cloud 104A and VPCs 206 and 208.

The process for configuring the new VPC 210 and interconnecting the new VPC 210 with the cloud 104A and VPCs 206 and 208 can be automated or substantially automated and can be completed without modifying other existing clouds or regions (e.g., cloud 104A and VPCs 206 and 208).

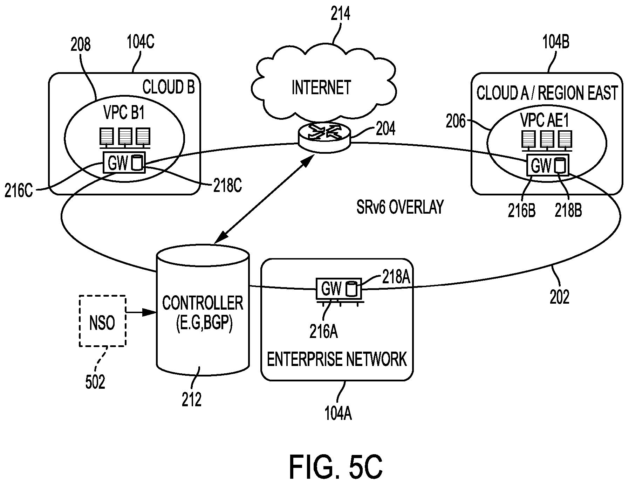

In some cases, an Internet Edge Router (physical or virtual) can be deployed in the SRv6 overlay 202 to connect the different regions/networks (e.g., cloud 104A and VPCs 206 and 208) to the Internet 214. For example, with reference to FIG. 5C, Internet Edge Router 204 can be inserted in the SRv6 overlay 202. The controller 212 can send routes, SIDs, and SR policies to the Internet Edge Router 204. The controller 212 can use BGP SR-TE to populate the Internet Edge Router 204 with appropriate forwarding data. The Internet Edge Router 204 can then route traffic between the Internet 214 and the different regions/networks (e.g., cloud 104A and VPCs 206 and 208).

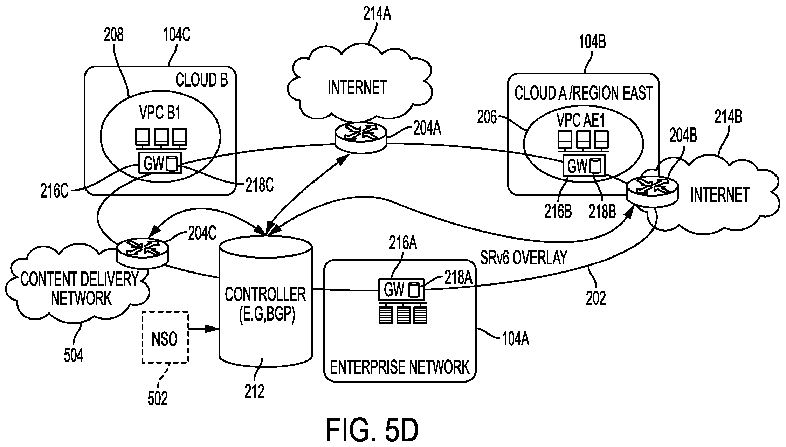

With reference to FIG. 5D, Internet Edge Routers 204A-C (physical or virtual) can be deployed in the SRv6 overlay 202 to provide the different regions/networks (e.g., cloud 104A and VPCs 206 and 208) access to multiple Internet peering points 214A, 214B and a content delivery network 504. The controller 212 can send routes, SIDs, and SR policies to the Internet Edge Routers 204A-C, which the Internet Edge Routers 204A-C can use to enable connectivity to the Internet peering points 214A, 214B and the content delivery network 504. The controller 212 can use BGP SR-TE to populate the Internet Edge Routers 204A-C with appropriate forwarding data. The Internet Edge Routers 204A-C can then provide the different regions/networks (e.g., cloud 104A and VPCs 206 and 208) direct access to the Internet peering points 214A, 214B and the content delivery network 504.

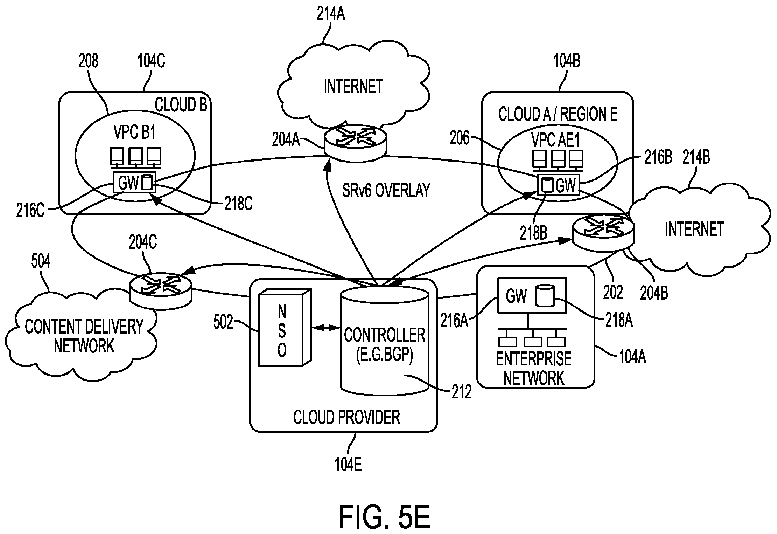

With reference to FIG. 5E, in some examples the controller 212 and NSO 502 can be a cloud service provided by a cloud provider 104E. The controller 212 and NSO 502 can be hosted by the cloud 104E and configured to collect topology information from the virtual gateways 216A-C on the different regions/networks (e.g., cloud 104A and VPCs 206 and 208), compute paths, and send routes, SIDs, and SR policies to the virtual gateways 216A-C and the Internet Edge Routers 204A-C.

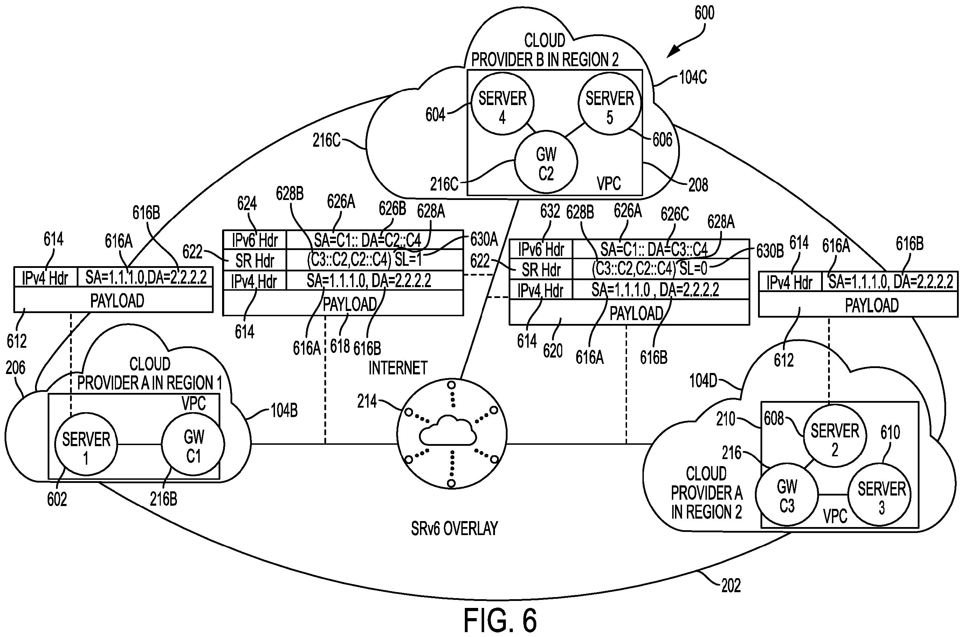

FIG. 6 illustrates an example service chaining traffic flow 600 where packets are steered over SRv6 overlay 202 through nodes on VPCs 206, 208, 210 in clouds 104B, 104C, 104D, which are interconnected according to the approaches herein. In this example, cloud 104B represents a cloud located in Region 1 of Cloud Provider A, cloud 104C represents a cloud located in Region 2 of Cloud Provider B, and cloud 104D represents a cloud located in Region 2 of Cloud Provider A. Clouds 104B, 104C, and 104D respectively include VPCs 206, 208, and 210, configured as previously described. Moreover, VPCs 206, 208, and 210 respectively include virtual gateways 216B, 216C, and 216D, configured as previously described. Virtual gateways 216B, 216C and 216D are all SRv6-capable nodes.

In addition, VPC 206 includes server 602 (Server 1), VPC 208 includes servers 604 (Server 4) and 606 (Server 5), and VPC 210 includes servers 608 (Server 2) and 610 (Server 3). The virtual gateways 216B, 216C, and 216D can interconnect VPCs 206, 208, and 210 and route packets to the various servers (602, 604, 606, 608, 610) on the VPCs 206, 208, and 210, as shown in traffic flow 600.

In this example, server 602 (Server 1) sends packet 612 to virtual gateway 216B. Packet 612 includes IPv4 header 614 with a source address 616A (SA) corresponding to server 602 (Server 1) and a destination address 616B (DA) corresponding to server 608 (Server 2) on VPC 210. Virtual gateway 216B receives the packet 612 and encapsulates the packet 612 with SRv6 header 622 and IPv6 header 624, to create SRv6 packet 618 for routing through the SRv6 overlay 202. Virtual gateway 216B then sends the packet 618 to the virtual gateway 216C (C2) via the Internet 214 and the SRv6 overlay 202.

The SRv6 header 622 can include a list of segments associated with a service chain configured for the traffic. The list of segments includes segment 628A and segment 628B. Segment 628A represents virtual gateway 216C on VPC 208 and segment 628B represents virtual gateway 216D on VPC 210. In addition, segments 628A and 628B are associated with respective SR functions to be executed by segments 628A and 628B upon receipt of the packet 618. In this example, segment 628A is associated with the function C4, which instructs the virtual gateway 216C (e.g., segment 628A) to x-connect to Server 4 (604), and segment 628B is associated with the function C2, which instructs the virtual gateway 216D (e.g., segment 628B) to x-connect (function C) to Server 2 (608). The list of segments in the SRv6 header 622 also includes counter 630A, which identifies the active segment or the Segments Left. Server 4 (604) can represent the first service in the service chain, and Server 2 (608) can represent the next service in the service chain. Thus, the list of segments (628A, 628B), including the associated SR functions, can be used by the virtual gateways 216B-D to steer the packet 618 through the service chain.

The IPv6 header 624 of packet 618 can include a source address 626A corresponding to the virtual gateway 216B (e.g., C1) and a destination address 626B corresponding to the virtual gateway 216C on VPC 208. The destination address 626B in the IPv6 header 624 can also include a function to be executed by the virtual gateway 216C upon receipt. In this example, the function is C4, which as previously explained instructs the virtual gateway 216C (e.g., segment 628A) to x-connect (function C) to Server 4 (604).

When the virtual gateway 216C (C2) receives the packet 618, it looks at the list of segments and associated functions in the SRv6 header 622 as well as the destination address 626B and associated function on the IPv6 header 624, to determine how to process the packet 618. The virtual gateway 216C (C2) then executes the function C4 defined in the SRv6 header 622 and the IPv6 header 624 for segment 628A, which corresponds to the virtual gateway 216C (C2). Accordingly, based on the function C4, the virtual gateway 216C (C2) sends the packet 618 to Server 4 (604). Server 4 (604) can receive the packet 618 and process it accordingly.

The virtual gateway 216C (C2) also identifies the next segment 628B in the list of segments on the SRv6 header 622, and determines the packet 618 should be routed to virtual gateway 216D. The virtual gateway 216C (C2) modifies the packet 618 for sending to the next segment 628B (virtual gateway 216D). The modified packet 620 includes a new counter 630B denoting the new Segments Left value of the old counter 630A is decreased by 1. The modified packet 620 also includes a modified IPv6 header 632. The modified IPv6 header 632 identifies the source address 626A, which is the same source address included in the IPv6 header 624 of packet 618, and a new destination address 626C (C3) corresponding to the next segment 628B (virtual gateway 216D). The new destination address 626C (C3) is also associated with a function to be executed by the next segment 628B upon receipt. In this example, the function is C2, which instructs the next segment 628B (virtual gateway 216D) to x-connect (function C) to Server 2 (608).

The virtual gateway 216C (C2) then sends the modified packet 620 to the virtual gateway 216D (C3), identified as the next segment 628B in the SRv6 header 622. When the virtual gateway 216D (C3) receives the modified packet 620, it looks at the list of segments and associated functions in the SRv6 header 622 and the destination address 626 and associated function in the IPv6 header 632, to determine how to process the modified packet 620. The virtual gateway 216C (C2) then executes the function C2 defined in the SRv6 header 622 and the IPv6 header 632 for segment 628B, which corresponds to the virtual gateway 216D (C3). Based on the function C2, the virtual gateway 216D (C3) sends the packet 612 to Server 2 (608), which is the final destination in the flow 600. Server 2 (608) can receive the packet 612 and process it accordingly.

As illustrated above, the virtual gateways (e.g., 216B-D) can perform service insertion and SRv6-based service chaining over the SRv6 overlay 202. In some cases, the virtual gateways can perform service chain distribution using BGP-TE. Moreover, in some cases, the virtual gateways can perform service chaining based on BGP policies (e.g., location, inner versus outer traffic, Internet, Intranet, etc.). The virtual gateways can also perform SRv6-based load balancing and performance-based routing. For example, the virtual gateways can measure latencies between themselves. The controller 212 can use the latency measurements to compute the optimal path or VPC to reach a given service identified by an address such as a virtual IP (VIP) or anycast address. The virtual gateways can interconnect VPCs across different cloud provider and/or cloud provider regions. The techniques herein allow a client associated with a private cloud or network to easily deploy new VPCs on different cloud providers or cloud provider regions, and interconnect those VPCs with the client's network and any other VPCs established.

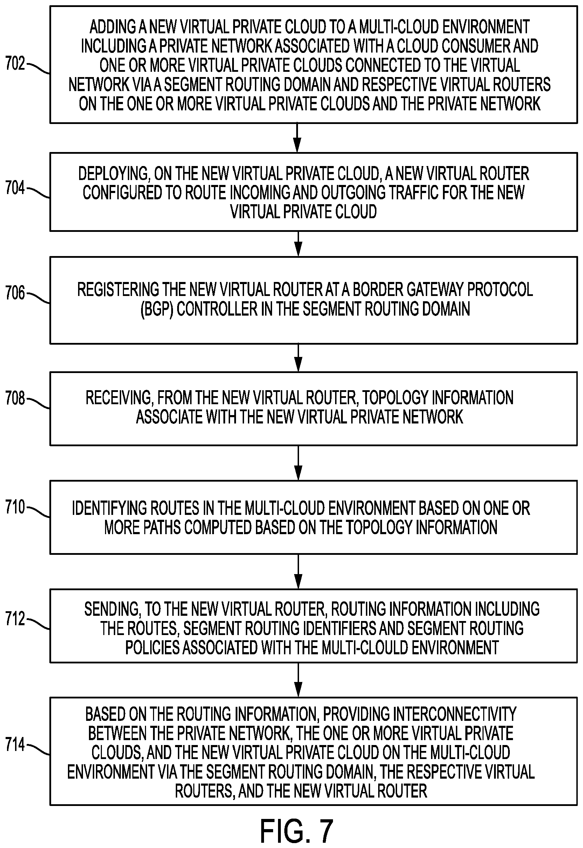

Having described example systems and concepts, the disclosure now turns to the method illustrated in FIG. 7. The steps outlined herein are examples and can be implemented in any combination thereof, including combinations that exclude, add, or modify certain steps.

At step 702, a new VPC (e.g., 210) can be added to a multi-cloud environment (e.g., 200) comprising a private network (e.g., 104A) and one or more VPCs (e.g., 206, 208) connected to the private network via a segment routing domain (e.g., SRv6 overlay 202) and respective virtual routers (e.g., virtual gateways 216A-C) on the one or more VPCs and the private network.

At step 704, a new virtual router (e.g., virtual gateway 216D) can be deployed on the new VPC. The new virtual router can route incoming and outgoing traffic for the new VPC. In some cases, the new virtual router can be deployed via a VM, server, or software container obtained through a cloud market place associated with a cloud provider hosting the new VPC.

At step 706, the new virtual router can be registered at a BGP controller (e.g., 212) in the segment routing domain. In some cases, the new virtual router can be pre-staged to register with the BGP controller upon deployment.

At step 708, the BGP controller can receive, from the new virtual router, topology information associate with the new VPC. In some cases, the BGP controller can receive the topology information via BGP-LS.

At step 710, the BGP controller can identify routes in the multi-cloud environment based on one or more paths computed based on the topology information. The one or more paths can be best paths computed between the private network, the one or more VPCs, and the new VPC. For example, the BGP controller can include a path computation engine which can compute paths based on the topology information.

At step 712, the BGP controller can send, to the new virtual router, routing information for communicating across the multi-cloud environment. The routing information includes the routes, segment routing identifiers (e.g., SIDs) and segment routing policies associated with the multi-cloud environment. The segment routing identifiers can correspond to SRv6-capable nodes on the multi-cloud environment, such as the respective virtual routers and the new virtual router. The BGP controller can populate the routing information on the new virtual router using BGP-TE, for example.

Based on the routing information, at step 714, the method can provide interconnectivity between the private network, the one or more VPCs, and the new VPC via the segment routing domain, the respective virtual routers, and the new virtual router. The respective virtual routers and the new virtual router can route traffic between the private network, the one or more VPCs, and the new VPC based on the routes, segment routing identifiers, and segment routing policies, as previously explained.

In some cases, an Internet Edge Router (e.g., 204) can be deployed in the segment routing domain to provide Internet connectivity to the private network, the one or more VPCs, and the new VPC. The BGP controller can send, to the Internet Edge Router, the routing information associated with the multi-cloud environment. The routing information can enable the Internet Edge Router to connect the private network, the one or more VPCs, and the new VPC to the Internet.

The disclosure now turns to FIGs. 8 and 9, which illustrate example network devices and computing devices, such as switches, routers, load balancers, client devices, and so forth.

FIG. 8 illustrates an example network device 800 suitable for performing switching, routing, load balancing, and other networking operations. Network device 800 includes a central processing unit (CPU) 804, interfaces 802, and a connection 810 *(e.g.,* a PCI bus). When acting under the control of appropriate software or firmware, the CPU 804 is responsible for executing packet management, error detection, and/or routing functions. The CPU 804 preferably accomplishes all these functions under the control of software including an operating system and any appropriate applications software. CPU 804 may include one or more processors 808, such as a processor from the INTEL X86 family of microprocessors. In some cases, processor 808 can be specially designed hardware for controlling the operations of network device 800. In some cases, a memory 806 (e.g., non-volatile RAM, ROM, etc.) also forms part of CPU 804. However, there are many different ways in which memory could be coupled to the system.

The interfaces 802 are typically provided as modular interface cards (sometimes referred to as "line cards"). Generally, they control the sending and receiving of data packets over the network and sometimes support other peripherals used with the network device 800. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM The independent processors may control such communications intensive tasks as packet switching, media control, signal processing, crypto processing, and management. By providing separate processors for the communications intensive tasks, these interfaces allow the master microprocessor 804 to efficiently perform routing computations, network diagnostics, security functions, etc.

Although the system shown in FIG. 8 is one specific network device of the present technologies, it is by no means the only network device architecture on which the present technologies can be implemented. For example, an architecture having a single processor that handles communications as well as routing computations, etc., is often used. Further, other types of interfaces and media could also be used with the network device 800.

Regardless of the network device's configuration, it may employ one or more memories or memory modules (including memory 806) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 806 could also hold various software containers and virtualized execution environments and data.

The network device 800 can also include an application-specific integrated circuit (ASIC), which can be configured to perform routing and/or switching operations. The ASIC can communicate with other components in the network device 800 via the connection 810, to exchange data and signals and coordinate various types of operations by the network device 800, such as routing, switching, and/or data storage operations, for example.

FIG. 9 illustrates a computing system architecture 900 wherein the components of the system are in electrical communication with each other using a connection 905, such as a bus. Exemplary system 900 includes a processing unit (CPU or processor) 910 and a system connection 905 that couples various system components including the system memory 915, such as read only memory (ROM) 920 and random access memory (RAM) 925, to the processor 910. The system 900 can include a cache of high-speed memory connected directly with, in close proximity to, or integrated as part of the processor 910. The system 900 can copy data from the memory 915 and/or the storage device 930 to the cache 912 for quick access by the processor 910. In this way, the cache can provide a performance boost that avoids processor 910 delays while waiting for data. These and other modules can control or be configured to control the processor 910 to perform various actions. Other system memory 915 may be available for use as well. The memory 915 can include multiple different types of memory with different performance characteristics. The processor 910 can include any general purpose processor and a hardware or software service, such as service 1 932, service 2 934, and service 3 936 stored in storage device 930, configured to control the processor 910 as well as a special-purpose processor where software instructions are incorporated into the actual processor design. The processor 910 may be a completely self-contained computing system, containing multiple cores or processors, a bus, memory controller, cache, etc. A multi-core processor may be symmetric or asymmetric.

To enable user interaction with the computing device 900, an input device 945 can represent any number of input mechanisms, such as a microphone for speech, a touch-sensitive screen for gesture or graphical input, keyboard, mouse, motion input, speech and so forth. An output device 935 can also be one or more of a number of output mechanisms known to those of skill in the art. In some instances, multimodal systems can enable a user to provide multiple types of input to communicate with the computing device 900. The communications interface 940 can generally govern and manage the user input and system output. There is no restriction on operating on any particular hardware arrangement and therefore the basic features here may easily be substituted for improved hardware or firmware arrangements as they are developed.

Storage device 930 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 925, read only memory (ROM) 920, and hybrids thereof.

The storage device 930 can include services 932, 934, 936 for controlling the processor 910. Other hardware or software modules are contemplated. The storage device 930 can be connected to the system connection 905. In one aspect, a hardware module that performs a particular function can include the software component stored in a computer-readable medium in connection with the necessary hardware components, such as the processor 910, connection 905, output device 935, and so forth, to carry out the function.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" a set indicates that one member of the set or multiple members of the set satisfy the claim. For example, claim language reciting "at least one of A and B" means A, B, or A and B.

## Claims

1. A method comprising:
adding (702) a new virtual private cloud to a multi-cloud environment comprising a private network and one or more virtual private clouds connected to the private network via a segment routing domain and respective virtual routers on the one or more virtual private clouds and the private network;
deploying (704), on the new virtual private cloud, a new virtual router configured to route incoming and outgoing traffic for the new virtual private cloud;
registering (706) the new virtual router at a border gateway protocol, BGP, controller in the multi-cloud environment;
receiving (708), at the BGP controller and from the new virtual router, topology information associated with the new virtual private cloud;
identifying (710) routes in the multi-cloud environment based on one or more paths computed based on the topology information, wherein the one or more paths are between at least one of the private network, the one or more virtual private clouds, and the new virtual private cloud on the multi-cloud environment;
sending (712), by the BGP controller to the new virtual router, routing information for communicating across the multi-cloud environment, the routing information comprising the routes, segment routing identifiers and segment routing policies associated with the multi-cloud environment; and
based (714) on the routing information, providing interconnectivity between the private network, the one or more virtual private clouds, and the new virtual private cloud on the multi-cloud environment via the segment routing domain, the respective virtual routers, and the new virtual router.

2. The method of claim 1, further comprising:
sending, by the BGP controller to an internet edge router deployed in the segment routing domain, the routing information associated with the multi-cloud environment, the routing information enabling the internet edge router to connect the private network, the one or more virtual private clouds, and the new virtual private cloud to the Internet.

3. The method of claim 1 or 2, wherein the new virtual private cloud and the one or more virtual private clouds run one or more respective BGP agents.

4. The method of any preceding claim, wherein the segment routing domain comprises an SRv6 overlay and the segment routing identifiers correspond to the respective virtual routers and the new virtual router, and wherein the respective virtual routers and the new virtual router comprise SRv6-capable nodes, the method optionally further comprising:
based on the segment routing identifiers, routing SRv6 traffic between at least two of the respective virtual routers or the new virtual router via the SRv6 overlay.

5. The method of any preceding claim, further comprising:
based on the topology information, computing, via the BGP controller, the one or more paths between the private network, the one or more virtual private clouds, and the new virtual private cloud on the multi-cloud environment, the one or more paths comprising a respective best path between the private network, the one or more virtual private clouds, and the new virtual private cloud.

6. The method of any preceding claim, wherein the topology information is received by the BGP controller via BGP Link-State protocol, BGP-LS.

7. The method of any preceding claim, wherein the routing information is sent by the BGP controller via BGP Traffic Engineering, BGP-TE.

8. The method of any preceding claim, wherein the respective virtual routers and the new virtual router are deployed via respective virtual machines from cloud market places associated with one or more cloud providers hosting the one or more virtual private clouds and the new virtual private cloud, optionally wherein the respective virtual routers and the new virtual router are pre-staged to connect and register with the BGP controller.

9. A system comprising:
one or more processors; and
at least one computer-readable storage medium having stored therein instructions which, when executed by the one or more processors, cause the system to:
add (702) a new virtual private cloud to a multi-cloud environment comprising a private network associated with a cloud consumer and one or more virtual private clouds connected to the private network via a segment routing domain and respective virtual routers on the one or more virtual private clouds and the private network;
in response to adding the new virtual private cloud, deploy (704), on the new virtual private cloud, a new virtual router configured to route incoming and outgoing traffic for the new virtual private cloud; register (706) the new virtual router at a border gateway protocol, BGP, controller in the multi-cloud environment;
receive (708), from the new virtual router, topology information associated with the new virtual private cloud;
identify (710) routes in the multi-cloud environment based on one or more paths computed based on the topology information, wherein the one or more paths are between at least one of the private network, the one or more virtual private clouds, and the new virtual private cloud on the multi-cloud environment; and
send (712), to the new virtual router, routing information for interconnecting the new virtual private cloud, the one or more virtual private clouds, and the private network in the multi-cloud environment, the routing information comprising the routes, segment routing identifiers and segment routing policies associated with the multi-cloud environment; and based on the routing information, provide (714) interconnectivity between the private network, the one or more virtual private clouds, and the new virtual private cloud on the multi- cloud environment via the segment routing domain, the respective virtual routers, and the new virtual router.

10. The system of claim 9, the at least one computer-readable storage medium storing additional instructions which, when executed by the one or more processors, cause the system
to: send, to an internet edge router deployed on the segment routing domain, the routing information associated with the multi-cloud environment, the routing information enabling the internet edge router to connect the private network, the one or more virtual private clouds, and the new virtual private cloud to the Internet.

11. The system of claim 9 or 10, wherein the segment routing domain comprises an SRv6 overlay and the segment routing identifiers correspond to the respective virtual routers and the new virtual router, and wherein the respective virtual routers and the new virtual router comprise SRv6-capable nodes.

12. The system of any of claims 9 to 11, the at least one computer-readable storage medium storing additional instructions which, when executed by the one or more processors, cause the system to:
based on the topology information, compute the one or more paths between the private network, the one or more virtual private clouds, and the new virtual private cloud on the multi-cloud environment, the one or more paths comprising a respective best path between the private network, the one or more virtual private clouds, and the new virtual private cloud.

13. The system of any of claims 9 to 12, wherein the topology information is received by the system via BGP Link-State protocol, BGP-LS, and wherein the system comprises a BGP controller.

14. The system of any of claims 9 to 14, the at least one computer-readable storage medium storing additional instructions which, when executed by the one or more processors, cause the system to:
implement, for SRv6 traffic in the multi-cloud environment, a particular SRv6 function which, upon the SRv6 traffic egressing a particular cloud in the multi-cloud environment, modifies an IPv6 source address associated with the SRv6 traffic to prevent reverse path forwarding, RPF, check failures, wherein the particular SRv6 function is applicable to at least one of an SRv6 End function, an SRv6 End.T function, and SRv6 End.X function, or one or more SRv6 proxy functions.

15. A non-transitory computer-readable storage medium comprising:
instructions stored therein instructions which, when executed by one or more processors, cause the one or more processors to perform the method of any of claims 1 to 8.

## Patentansprüche

1. Verfahren, das aufweist:
Hinzufügen (702) einer neuen virtuellen privaten Cloud zu einer Multi-Cloud-Umgebung, die ein privates Netzwerk und eine oder mehrere virtuelle private Clouds aufweist, die mit dem privaten Netzwerk über eine Segmentroutingdomäne und jeweilige virtuelle Router auf der einen oder den mehreren virtuellen privaten Clouds und dem privaten Netzwerk verbunden sind;
Einsetzen (704), auf der neuen virtuellen privaten Cloud, eines neuen virtuellen Routers, der dazu konfiguriert ist, ankommenden und abgehenden Verkehr für die neue virtuelle private Cloud zu routen;
Registrieren (706) des neuen virtuellen Routers an einem Border Gateway Protocol, BGP, -Controller in der Multi-Cloud-Umgebung;
Empfangen (708), an dem BGP-Controller und von dem neuen virtuellen Router, von Topologieinformationen, die zu der neuen virtuellen privaten Cloud zugehörig sind;
Identifizieren (710) von Routen in der Multi-Cloud-Umgebung basierend auf einem oder mehreren Pfaden, die basierend auf den Topologieinformationen berechnet werden, wobei sich der eine oder die mehreren Pfade zwischen wenigstens einem des privaten Netzwerks, der einen oder der mehreren virtuellen privaten Clouds und der neuen virtuellen privaten Cloud in der Multi-Cloud-Umgebung befinden;
Senden (712), durch den BGP-Controller an den neuen virtuellen Router, von Routinginformationen zum Kommunizieren über die Multi-Cloud-Umgebung, wobei die Routinginformationen die Routen, Segmentroutingkennungen und Segmentrouting-Richtlinien aufweisen, die zu der Multi-Cloud-Umgebung zugehörig sind; und
basierend (714) auf den Routinginformationen, Bereitstellen von Interkonnektivität zwischen dem privaten Netzwerk, der einen oder den mehreren virtuellen privaten Clouds und der neuen virtuellen privaten Cloud in der Multi-Cloud-Umgebung über die Segmentroutingdomäne, die jeweiligen virtuellen Router und den neuen virtuellen Router.

2. Verfahren nach Anspruch 1, das des Weiteren aufweist:
Senden, durch den BGP-Controller an einen Internet Edge-Router, der in der Segmentroutingdomäne eingesetzt wird, der Routinginformationen, die zu der Multi-Cloud-Umgebung zugehörig sind, wobei die Routinginformationen es dem Internet Edge-Router ermöglichen, das private Netzwerk, die eine oder die mehreren virtuellen privaten Clouds und die neue virtuelle private Cloud mit dem Internet zu verbinden.

3. Verfahren nach Anspruch 1 oder 2, wobei die neue virtuelle private Cloud und die eine oder die mehreren virtuellen privaten Clouds einen oder mehrere jeweilige BGP-Agents laufen lassen.

4. Verfahren nach einem der vorhergehenden Ansprüche, wobei die Segmentroutingdomäne ein SRv6 Overlay aufweist und die Segmentroutingkennungen den jeweiligen virtuellen Routern und dem neuen virtuellen Router entsprechen, und wobei die jeweiligen virtuellen Router und der neue virtuelle Router SRv6-fähige Knoten aufweisen, wobei das Verfahren optional des Weiteren aufweist:
basierend auf den Segmentroutingkennungen Routen des SRv6-Verkehrs zwischen wenigstens zwei der jeweiligen virtuellen Router oder dem neuen virtuellen Router über das SRv6 Overlay.

5. Verfahren nach einem der vorhergehenden Ansprüche, das des Weiteren aufweist:
basierend auf den Topologieinformationen Berechnen, über den BGP-Controller, des einen oder der mehreren Pfade zwischen dem privaten Netzwerk, der einen oder den mehreren virtuellen privaten Clouds und der neuen virtuellen privaten Cloud in der Multi-Cloud-Umgebung, wobei der eine oder die mehreren Pfade einen jeweiligen besten Pfad zwischen dem privaten Netzwerk, der einen oder den mehreren virtuellen privaten Clouds und der neuen virtuellen privaten Cloud aufweisen.

6. Verfahren nach einem der vorhergehenden Ansprüche, wobei die Topologieinformationen von dem BGP-Controller über ein BGP Link-State Protokoll, BGP-LS, empfangen werden.

7. Verfahren nach einem der vorhergehenden Ansprüche, wobei die Routinginformationen von dem BGP-Controller über BGP Traffic Engineering, BGP-TE, gesendet werden.

8. Verfahren nach einem der vorhergehenden Ansprüche, wobei die jeweiligen virtuellen Router und der neue virtuelle Router über jeweilige virtuelle Maschinen von Cloud-Marktplätzen, die zu einem oder mehreren Cloud-Providern zugehörig sind, die die eine oder die mehreren virtuellen privaten Clouds und die neue virtuelle private Cloud hosten, eingesetzt werden, wobei optional die jeweiligen virtuellen Router und der neue virtuelle Router vormontiert werden, um sich mit/bei dem BGP-Controller zu verbinden und zu registrieren.

9. System, das aufweist:
einen oder mehrere Prozessoren; und
wenigstens ein computerlesbares Speichermedium, auf dem Befehle gespeichert sind, die, wenn sie von dem einen oder den mehreren Prozessoren ausgeführt werden, das System veranlassen zum:
Hinzufügen (702) einer neuen virtuellen privaten Cloud zu einer Multi-Cloud-Umgebung, die ein privates Netzwerk, das zu einem Cloud-Kunden zugehörig ist, und eine oder mehrere virtuelle private Clouds aufweist, die mit dem privaten Netzwerk über eine Segmentroutingdomäne und jeweilige virtuelle Router auf der einen oder den mehreren virtuellen privaten Clouds und dem privaten Netzwerk verbunden sind;
im Ansprechen auf das Hinzufügen der neuen virtuellen privaten Cloud, Einsetzen (704), auf der neuen virtuellen privaten Cloud, eines neuen virtuellen Routers, der dazu konfiguriert ist, ankommenden und abgehenden Verkehr für die neue virtuelle private Cloud zu routen;
Registrieren (706) des neuen virtuellen Routers an einem Border Gateway Protocol, BGP, -Controller in der Multi-Cloud-Umgebung;
Empfangen (708), von dem neuen virtuellen Router, von Topologieinformationen, die zu der neuen virtuellen privaten Cloud zugehörig sind;
Identifizieren (710) von Routen in der Multi-Cloud-Umgebung basierend auf einem oder mehreren Pfaden, die basierend auf den Topologieinformationen berechnet werden, wobei sich der eine oder die mehreren Pfade zwischen wenigstens einem des privaten Netzwerks, der einen oder der mehreren virtuellen privaten Clouds und der neuen virtuellen privaten Cloud in der Multi-Cloud-Umgebung befinden; und
Senden (712), an den neuen virtuellen Router, von Routinginformationen zum Verbinden der neuen virtuellen privaten Cloud, der einen oder der mehreren virtuellen privaten Clouds und des privaten Netzwerks in der Multi-Cloud-Umgebung, wobei die Routinginformationen die Routen, Segmentroutingkennungen und Segmentrouting-Richtlinien aufweisen, die zu der Multi-Cloud-Umgebung zugehörig sind; und
basierend auf den Routinginformationen, Bereitstellen (714) von Interkonnektivität zwischen dem privaten Netzwerk, der einen oder den mehreren virtuellen privaten Clouds und der neuen virtuellen privaten Cloud in der Multi-Cloud-Umgebung über die Segmentroutingdomäne, die jeweiligen virtuellen Router und den neuen virtuellen Router.

10. System nach Anspruch 9, wobei das wenigstens eine computerlesbare Speichermedium zusätzliche Befehle speichert, die, wenn sie von dem einen oder den mehreren Prozessoren ausgeführt werden, das System veranlassen zum:
Senden, an einen Internet Edge-Router, der in der Segmentroutingdomäne eingesetzt wird, der Routinginformationen, die zu der Multi-Cloud-Umgebung zugehörig sind, wobei die Routinginformationen es dem Internet Edge-Router ermöglichen, das private Netzwerk, die eine oder die mehreren virtuellen privaten Clouds und die neue virtuelle private Cloud mit dem Internet zu verbinden.

11. System nach Anspruch 9 oder 10, wobei die Segmentroutingdomäne ein SRv6 Overlay aufweist und die Segmentroutingkennungen den jeweiligen virtuellen Routem und dem neuen virtuellen Router entsprechen, und wobei die jeweiligen virtuellen Router und der neue virtuelle Router SRv6-fähige Knoten aufweisen.

12. System nach einem der Ansprüche 9 bis 11, wobei das wenigstens eine computerlesbare Speichermedium zusätzliche Befehle speichert, die, wenn sie von dem einen oder den mehreren Prozessoren ausgeführt werden, das System veranlassen zum:
basierend auf den Topologieinformationen Berechnen des einen oder der mehreren Pfade zwischen dem privaten Netzwerk, der einen oder den mehreren virtuellen privaten Clouds und der neuen virtuellen privaten Cloud in der Multi-Cloud-Umgebung, wobei der eine oder die mehreren Pfade einen jeweiligen besten Pfad zwischen dem privaten Netzwerk, der einen oder den mehreren virtuellen privaten Clouds und der neuen virtuellen privaten Cloud aufweisen.

13. System nach einem der Ansprüche 9 bis 12, wobei die Topologieinformationen von dem System über ein BGP Link-State Protokoll, BGP-LS, empfangen werden, und wobei das System einen BGP-Controller aufweist.

14. System nach einem der Ansprüche 9 bis 14,wobei das wenigstens eine computerlesbare Speichermedium zusätzliche Befehle speichert, die, wenn sie von dem einen oder den mehreren Prozessoren ausgeführt werden, das System veranlassen zum:
Implementieren, für SRv6 Verkehr in der Multi-Cloud-Umgebung, einer bestimmten SRv6 Funktion die, wenn der SRv6 Verkehr eine bestimmte Cloud in der Multi-Cloud-Umgebung verlässt, eine Ipv6 Quelladresse modifiziert, die zu dem SRv6 Verkehr zugehörig ist, um Reverse Path Forwarding, RPF, -Prüfungsfehler zu verhindern, wobei die bestimmte SRv6 Funktion auf wenigstens eines anwendbar ist von einer SRv6 Endfunktion, einer SRv6 End.T Funktion und einer SRv6 End.X Funktion oder einer oder mehreren SRv6 Proxyfunktionen.

15. Nicht flüchtiges computerlesbares Speichermedium, das aufweist:
Befehle, die darin gespeichert sind und die, wenn sie von einem oder mehreren Prozessoren ausgeführt werden, veranlassen, dass der eine oder die mehreren Prozessoren das Verfahren nach einem der Ansprüche 1 bis 8 durchführen.

## Revendications

1. Procédé, comprenant :
l'ajout (702) d'un nouveau nuage privé virtuel à un environnement multi-nuages comprenant un réseau privé et un ou plusieurs nuages privés virtuels reliés au réseau privé par le biais d'un domaine de routage de segments et des routeurs virtuels respectifs sur l'un ou plusieurs nuages privés virtuels et le réseau privé ;
le déploiement (704), sur le nouveau nuage privé virtuel, d'un nouveau routeur virtuel configuré pour router le trafic entrant et sortant pour le nouveau nuage privé virtuel ;
l'enregistrement (706) du nouveau routeur virtuel au niveau d'un contrôleur de protocole de passerelle frontière, BGP, dans l'environnement multi-nuages ;
la réception (708), au niveau du contrôleur BGP et en provenance du nouveau routeur virtuel, d'informations de topologie associées au nouveau nuage privé virtuel ;
l'identification (710) de routes dans l'environnement multi-nuages sur la base d'un ou plusieurs chemins calculés sur la base des informations de topologie, dans lequel l'un ou plusieurs chemins sont entre au moins un emplacement parmi le réseau privé, l'un ou plusieurs nuages privés virtuels et le nouveau nuage privé virtuel sur l'environnement multi-nuages ;
l'envoi (712), par le contrôleur BGP au nouveau routeur virtuel, d'informations de routage pour la communication à travers l'environnement multi-nuages, les informations de routage comprenant les routes, des identifiants de routage de segments et des polices de routage de segments associées à l'environnement multi-nuages ; et
sur la base (714) des informations de routage, la fourniture d'une interconnectivité entre le réseau privé, l'un ou plusieurs nuages privés virtuels, et le nouveau nuage privé virtuel sur l'environnement multi-nuages par le biais du domaine de routage de segments, des routeurs virtuels respectifs et du nouveau routeur virtuel.

2. Procédé selon la revendication 1, comprenant en outre :
l'envoi, par le contrôleur BGP à un routeur de périphérie Internet déployé dans le domaine de routage de segments, des informations de routage associées à l'environnement multi-nuages, les informations de routage permettant au routeur de périphérie Internet de connecter le réseau privé, l'un ou plusieurs nuages privés virtuels et le nouveau nuage privé virtuel à l'Internet.

3. Procédé selon la revendication 1 ou 2, dans lequel le nouveau nuage privé virtuel et l'un ou plusieurs nuages privés virtuels exécutent un ou plusieurs agents BGP respectifs.

4. Procédé selon une quelconque revendication précédente, dans lequel le domaine de routage de segments comprend un recouvrement SRv6 et les identifiants de routage de segments correspondent aux routeurs virtuels respectifs et au nouveau routeur virtuel, et dans lequel les routeurs virtuels respectifs et le nouveau routeur virtuel comprennent des nœuds capables de SRv6, le procédé comprenant en option en outre :
sur la base des identifiants de routage de segments, le routage d'un trafic SRv6 entre au moins deux des routeurs virtuels respectifs ou le nouveau routeur virtuel par le biais du recouvrement SRv6.

5. Procédé selon une quelconque revendication précédente, comprenant en outre :
sur la base des informations de topologie, le calcul, par le biais du contrôleur BGP, de l'un ou plusieurs chemins entre le réseau privé, l'un ou plusieurs nuages privés virtuels et le nouveau nuage privé virtuel sur l'environnement multi-nuages, l'un ou plusieurs chemins comprenant un meilleur chemin respectif entre le réseau privé, l'un ou plusieurs nuages privés virtuels et le nouveau nuage privé virtuel.

6. Procédé selon une quelconque revendication précédente, dans lequel les informations de topologie sont reçues par le contrôleur BGP par le biais d'un protocole d'état de liaison BGP, BGP-LS.

7. Procédé selon une quelconque revendication précédente, dans lequel les informations de routage sont envoyées par le contrôleur BGP par le biais d'une ingénierie de trafic BGP, BGP-TE.

8. Procédé selon une quelconque revendication précédente, dans lequel les routeurs virtuels respectifs et le nouveau routeur virtuel sont déployés par le biais de machines virtuelles respectives à partir de places de marché en nuages associées à un ou plusieurs fournisseur de services d'informatique en nuage hébergeant l'un ou plusieurs nuages privés virtuels et le nouveau nuage privé virtuel, en option dans lequel les routeurs virtuels respectifs et le nouveau routeur virtuel sont montés préalablement pour se connecter et s'enregistrer avec le contrôleur BGP.

9. Système comprenant :
un ou plusieurs processeurs ; et
au moins un support de stockage lisible par un ordinateur ayant des instructions stockées à l'intérieur, lesquelles, lorsqu'elles sont exécutées par l'un ou plusieurs processeurs, amènent le système à :
ajouter (702) un nouveau nuage privé virtuel à un environnement multi-nuages comprenant un réseau privé associé à un consommateur en nuage et un ou plusieurs nuages privés virtuels reliés au réseau privé par le biais d'un domaine de routage de segments et des routeurs virtuels respectifs sur l'un ou plusieurs nuages privés virtuels et le réseau privé ;
en réponse à l'ajout du nouveau nuage privé virtuel, déployer (704), sur le nouveau nuage privé virtuel, un nouveau routeur virtuel configuré pour router le trafic entrant et sortant pour le nouveau nuage privé virtuel ;
enregistrer (706) le nouveau routeur virtuel au niveau d'un contrôleur de protocole de passerelle frontière, BGP, dans l'environnement multi-nuages ;
recevoir (708), en provenance du nouveau routeur virtuel, des informations de topologie associées au nouveau nuage privé virtuel ;
identifier (710) des routes dans l'environnement multi-nuages sur la base d'un ou plusieurs chemins calculés sur la base des informations de topologie, dans lequel l'un ou plusieurs chemins sont entre au moins un emplacement parmi le réseau privé, l'un ou plusieurs nuages privés virtuels et le nouveau nuage privé virtuel sur l'environnement multi-nuages ; et
envoyer (712), au nouveau routeur virtuel, des informations de routage pour l'interconnexion du nouveau nuage privé virtuel, de l'un ou plusieurs nuages privés virtuels et du réseau privé dans l'environnement multi-nuages, les informations de routage comprenant les routes, des identifiants de routage de segments et des polices de routage de segments associées à l'environnement multi-nuages ; et
sur la base des informations de routage, fournir (714) l'interconnectivité entre le réseau privé, l'un ou plusieurs nuages privés virtuels, et le nouveau nuage privé virtuel sur l'environnement multi-nuages par le biais du domaine de routage de segments, des routeurs virtuels respectifs et du nouveau routeur virtuel.

10. Système selon la revendication 9, l'au moins un support de stockage lisible par un ordinateur stockant des instructions supplémentaires qui, lorsqu'elles sont exécutées par l'un ou plusieurs processeurs, amènent le système à :
envoyer, à un routeur de périphérie Internet déployé sur le domaine de routage de segments, les informations de routage associées à l'environnement multi-nuages, les informations de routage permettant au routeur de périphérie Internet de connecter le réseau privé, l'un ou plusieurs nuages privés virtuels et le nouveau nuage privé virtuel à l'Internet.

11. Système selon la revendication 9 ou 10, dans lequel le domaine de routage de segments comprend un recouvrement SRv6 et les identifiants de routage de segments correspondent aux routeurs virtuels respectifs et au nouveau routeur virtuel, et dans lequel les routeurs virtuels respectifs et le nouveau routeur virtuel comprennent des nœuds capables de SRv6.

12. Système selon une quelconque des revendications 9 à 11, l'au moins un support de stockage lisible par un ordinateur stockant des instructions supplémentaires qui, lorsqu'elles sont exécutées par l'un ou plusieurs processeurs, amènent le système à :
sur la base des informations de topologie, calculer l'un ou plusieurs chemins entre le réseau privé, l'un ou plusieurs nuages privés virtuels et le nouveau nuage privé virtuel sur l'environnement multi-nuages, l'un ou plusieurs chemins comprenant un meilleur chemin respectif entre le réseau privé, l'un ou plusieurs nuages privés virtuels et le nouveau nuage privé virtuel.

13. Système selon une quelconque des revendications 9 à 12, dans lequel les informations de topologie sont reçues par le système par le biais d'un protocole d'état de liaison BGP, BGP-LS, et dans lequel le système comprend un contrôleur BGP.

14. Système selon une quelconque des revendications 9 à 14, l'au moins un support de stockage lisible par un ordinateur stockant des instructions supplémentaires qui, lorsqu'elles sont exécutées par l'un ou plusieurs processeurs, amènent le système à :
implémenter, pour le trafic SRv6 dans l'environnement multi-nuages, une fonction SRv6 particulière qui, lorsque le trafic SRv6 sort d'un nuage particulier dans l'environnement multi-nuages, modifie une adresse source IPv6 associée au trafic SRv6 pour empêcher des échecs de contrôle de transfert de chemin inverse (RPF), dans lequel la fonction SRv6 particulière est applicable à au moins une fonction parmi une fonction SRv6 End, une fonction SRv6 End.T et une fonction SRv6 End.X, ou une ou plusieurs fonctions proxy SRv6.

15. Support de stockage lisible par un ordinateur non-transitoire comprenant :
des instructions stockées à l'intérieur, instructions qui, lorsqu'elles sont exécutées par un ou plusieurs processeurs, amènent l'un ou plusieurs processeurs à mettre en œuvre le procédé selon une quelconque des revendications 1 à 8.
